# EUROPÄISCHE PATENTSCHRIFT

(11) **EP 0 691 000 B1**
(45) Veröffentlichungstag und Bekanntmachung des Hinweises auf die Patenterteilung: **06.08.1997**
(21) Anmeldenummer: 94912436.6
(22) Anmeldetag: 25.03.1994
(51) Int. Cl.: G03B 35/24, G02B 27/22

(54) **OPTISCHES SYSTEM ZUR ZWEI- UND DREIDIMENSIONALEN DARSTELLUNG VON INFORMATION**
OPTICAL SYSTEM FOR THE TWO AND THREE-DIMENSIONAL DISPLAY OF INFORMATION
SYSTEME OPTIQUE PERMETTANT DE REPRESENTER L'INFORMATION EN DEUX ET EN TROIS DIMENSIONS

(30) Priorität: 26.03.1993 DE 4309667
(43) Veröffentlichungstag der Anmeldung: 10.01.1996
(73) Patentinhaber: Technische Universität Dresden, 01062 Dresden (DE)
(72) Erfinder: SCHWERDTNER, Armin, D-01259 Dresden (DE); HEIDRICH, Holger, D-01309 Dresden (DE)
(86) Internationale Anmeldenummer: DE9400342
(87) Internationale Veröffentlichungsnummer: WO9423340

(56) Entgegenhaltungen:
- WO-A-92/03021
- AU-A- 1 307 692
- DE-A- 4 004 739
- DE-A- 4 006 868
- FR-A- 2 661 259
- US-A- 4 772 094

## Beschreibung

Die Erfindung betrifft ein optisches System zur zwei- und dreidimensionalen Darstellung von Information unter Verwendung von Transmissions-Displays für die Computer- und Videotechnik, für Head-Up-Displays in der Luft- und Raumfahrt, in der Werbung und Präsentation, in der Medizintechnik, im Bereich virtuelle Realität und in anderen Bereichen.

Die zweidimensionale Darstellung von Information unter Verwendung von Transmission-Displays mit matrixförmig angeordneten und elektronisch ansteuerbaren Pixeln ist seit langem bekannt und wird vor allem in der Computer- und Videotechnik und für Spiele und Anzeigen, insbesondere in tragbaren Computern, wie Laptops oder Palmtops, eingesetzt. Ein besonderer Nachteil bei diesen Systemen ist die erhebliche Leistung zum Betreiben der Beleuchtung, die die Batteriebetriebszeit herabsetzt.

Zur dreidimensionalen Darstellung von Information sind einige Lösungen bekannt.

Die wichtigste Rolle spielen hierbei stereoskopische Verfahren. Üblicherweise erfolgt die Zuordnung der beiden stereoskopischen Halbbilder durch zusätzliche Hilfsmittel. Dazu wird bei einem bekannten Verfahren das die beiden Halbbilder repräsentierende Licht zueinander senkrecht polarisiert, wobei durch eine Polarisationsbrille die Zuordnung auf die Augen des Betrachters erfolgt.

Eine andere Möglichkeit besteht in der sequentielle Darbietung der beiden Halbbilder, die über eine synchron schaltende Shutter-Brille den Augen des Betrachters richtig zugeordnet werden.

Stereoskopische Verfahren haben den großen Nachteil, daß die zusätzlichen Hilfsmittel erforderlich sind. Autostereoskopische Verfahren benötigen diese Hilfsmittel nicht.

Das bekannteste autostereoskopische Verfahren benutzt ein Linsenraster, das die Halbbilder pixelweise auf die Augen des Betrachters projiziert. Nachteilig ist vor allem die fixierte Position des Betrachters, dessen seitlicher Bewegungsraum auf einen Augenabstand beschränkt ist. Um diesen Spielraum zu vergrößern, muß die Anzahl der Pixel pro Rasterlinse vergrößert werden. Außerdem tritt das Bildspringen mit der lästigen Umkehr der Tiefenverhältnisse im betrachteten Bild auf. Noch größere Forderungen an die Auflösung der Displays stellen Lösungen für mehrere Betrachter. Ein solches Verfahren für eine Bild röhre ist aus WO92/03021 bekannt, wobei hier weiterhin vorgeschlagen wird, anstatt der Linsenraster Prismen zu verwenden. Eine Feldlinse ist jedoch nicht vorgesehen.

Ein weiteres autostereoskopisches Verfahren (US Patent 5,036,385) projiziert linien- oder punktfömige Lichtquellen durch die Pixel eines Transmissions-Displays auf die Augen des Betrachters. Die richtige Zuordnung entsteht, indem die Lichtquellen so angeordnet sind, daß sie durch die geradzahligen bzw. ungeradzahligen Spalten im Display jeweils nur für das rechte bzw. linke Auge sichbar sind. Nachteilig ist die fixierte Position des Betrachters, die komplizierte Beleuchtungseinrichtung und die große Leistung zum Betreiben der Beleuchtungseinrichtung. Eine Umschaltung für die Betrachtung zweidimensionaler Szenen ist vorgesehen. Verfahren dieser Art sind als Barriereverfahren bekannt. Beim Barriereverfahren ist ein Gitter so vor dem Display angeordnet, daß durch das Gitter hindurch mit dem linken Auge nur die dem linken Halbbild entsprechenden Spalten auf dem Display gesehen werden. Für das rechte Auge und den entsprechendem Bildinhalt gilt Analoges.

Das Verfahren nach dem australischen Patent (AU-A-13076/92) stellt ein variiertes Barriereverfahren dar. Anstelle des Gitters wird ein Schirm mit sonst geometrisch gleicher Anordnung von Prismen verwendet. Die prismenfreien Spalten des Schirms werden als Tor sowohl für das rechte als auch für das linke Halbbild verwendet. Wie in anderen Barriereverfahren ist die starre Zuordnung von Display und Betrachter sehr nachteilig.

Beim autostereoskopischen Verfahren nach der DE-OS 40 04 739 werden die beiden Halbbilder oder Teile der Halbbilder durch jeweils eine Lichtquelle eines Lichtquellenpaares abwechselnd auf die Augen des Betrachters kanalisiert. Dies wird durch optische Elemente mit Linsenfunktion erreicht, wobei sich das Transmissions-Display im Bereich der Aperturblenden der optischen Elemente befindet.

Nachteilig bei diesem zeitsequentiellen Verfahren ist die erforderliche Verdopplung der Bildfrequenz, die bei der zumindest gegenwärtig noch sehr begrenzten Umschaltfrequenz der Transmissions-Displays hohe Anforderungen an die Realisierung stellt, wenn das Bild flackerfrei gesehen werden soll.

Aufgabe der Erfindung ist es, unter Verwendung eines Transmissions-Display einem oder mehreren Betrachtern ein gut sichtbares zweidimensionales oder dreidimensionales autostereografisches Bild anzubieten, wobei die Betrachter sich beliebig seitlich und in der Höhe bewegen und das Bild ohne Hilfsmittel sehen können.

Erfindungsgemäß wird die Aufgabe mit den im Anspruch 1 genannten und in den Ausführungsbeispielen näher erläuterten Mitteln gelöst. Dem Oberbegriff des Anspruchs 1 liegt die Druckschrift DE'739 zugrunde.

Das Transmissions-Display enthält gleichzeitig immer beide Halbbilder. Ein Umschalten zwischen den Halbbildern ist nicht erforderlich.

Ein bevorzugtes Ausführungsbeispiel des optischen Systems zur zwei- und dreidimensionalen Darstellung von Information enthält folgende Elemente:

Eine Lichtquellenanordnung mit mindestens einer punkt- oder linienförmigen Lichtquelle, eine Kollimationsoptik zur Parallelisierung des Lichts, ein Transmissions-Display, eine Prismenmaske mit matrixförmig angeordneten Prismen, die zwei voneinander verschiedene Prismenwinkel haben, eine Feldlinse als Fokussieroptik, sowie eine Phasenmaske.

Das Licht wird durch die Kollimationsoptik parallelisiert und projiziert so pixelweise das linke Halbbild auf die zugehörigen (linken) Prismen mit dem einen Prismenwinkel und das rechte Halbbild auf die zugehörigen (rechten) Prismen mit dem anderen Prismenwinkel. Dadurch werden die beiden Halbbilder in ihren Richtungen räumlich voneinander getrennt. Mit der Fokussieroptik werden die beiden parallelen Bündel in zwei Punkten zusammengeführt, die dem Augenabstand entsprechen. Die Fokussieroptik ist daher in ihrer Wirkung eine einzige, das gesamte Bild umfassende, Feldlinse.

Das aus den Halbbildern zusammengesetzte Bild kann nur von diesen Orten aus gesehen werden.

Durch seitliche horizontale Verschiebung der Lichtquelle oder Lichtquellenanordnung erzeugt die Kollimationsoptik andere Richtungen paralleler Bündel, die nach Passieren des Transmissions-Displays und der den stereoskopischen Halbbildern entsprechenden Prismen in andere Richtungen aufgespaltet und durch die Fokussieroptik an anderen Punkten zusammengeführt werden. Auf diese Weise können die stereoskopischen Halbbilder der Position des Betrachters nachgeführt werden. Analog lassen sich durch zusätzliche Lichtquellen oder Lichtquellenanordnungen, die an zusätzlichen Orten die stereoskopischen Halbbilder liefern, mehrere bzw. viele Betrachter realisieren. Sie können sich alle seitlich bewegen, wobei die zugehörigen Lichtquellen nachgeführt werden.

Für einen oder einige wenige Betrachter können mit der Kopfbewegung und der Nachführung der Lichtquellenanordnung auch neue Bildinhalte angeboten werden, die der jeweiligen Position des oder der Betrachter entsprechen. So besteht die Möglichkeit, wie in der Holografie, auch hinter das dargestellte Objekt zu schauen.

Das aus der Kollimationsoptik austretende parallelisierte Licht für einen oder mehrere Betrachter kann auch von mehreren oder beliebig vielen punkt- oder linienförmigen Lichtquellen gebildet werden. Beispielsweise kann für einen Betrachter die Beleuchtung durch ein Array von punktförmigen Lichtquellen gebildet werden, deren Licht durch eine arrayförmig gestaltete Kollimationsoptik in eine durch die Lage der Lichtquellen gegebene Richtung kollimiert wird.

Durch die Bündelung des Lichts kann die Lichtleistung verringert und das Bild auch bei hellem Umgebungslicht gesehen werden.

Die jedem Pixel zugeordneten Phasenelemente mit zufällig über das Display verteilten Phasenhüben wirken wie eine Mattscheibe und sichern, daß die Augen nicht mehr auf die hellste Stelle, die Lichtquelle, adaptieren. Damit können auch relativ homogene Bildfelder zuverlässig betrachtet werden.

Insgesamt wird eine hohe Bildqualität erreicht, und zwar sowohl bei der zwei- als auch bei der dreidimensionalen (autostereoskopischen) Darstellung von Information.

Zur zweidimensionalen Darstellung werden die Halbbilder einer zweidimensionalen Informationsquelle entnommen, z. B. jede zweite Spalte für das linke bzw. rechte Auge (bei dem bekannten Wechsel der Zuordnung nach jeder Abtastung), und anschließend, auf die Augen abgelenkt und gebündelt, zu einem sehr gut sichtbaren zweidimensionalen Bild mit der höchsten Auflösung, die durch das Transmissons-Display gegeben ist, und großer Helligkeit wieder zusammengesetzt.

Gegenüber der üblichen Betrachtung entspricht dies einer Kanalisierung des Lichts vom Display auf einen kleinen Betrachtungswinkel. Dadurch kann der überwiegende Anteil der Energie, die sonst zur Beleuchtung erforderlich ist, eingespart werden. Außerdem ist die Betrachtung nur innerhalb dieses Betrachtungswinkels möglich. Hier werden vor allem Einsatzmöglichkeiten für Laptops gesehen.

Es ist möglich, mit ein und demselben optischen System bei Einsatz in der TV-Technik zwei verschiedene TV-Programme gleichzeitig zwei oder mehreren Personen anzubieten. Dazu werden synchron die beiden Bildinhalte, die je zwei Halbbilder enthalten, mit dem den Halbbildern für die Betrachter entsprechendem Licht sequentiell aktiviert. Es lassen sich auch mehr als zwei TV-Programme gleichzeitig mehreren Betrachtern anbieten. Sehen alle Betrachter das gleiche Programm, ist kein sequentielles Umschalten erforderlich. Die beiden Halbbilder werden durch Aktivieren des Lichts angeboten.

Zwei oder mehrere Betrachter können nur die Bilder sehen, die in den Projektionen auf die Augen des Betrachters enthalten sind. Das bedeutet, daß die Bilder keinen weiteren Personen oder keiner weiteren Betrachtung zugänglich sind, und daß sich die Bilder für zwei oder mehrere Betrachter nicht überlagern. Das kann vorteilhaft genutzt werden. So lassen sich trotz Publikum Informationen über ein Laptop eingeben und übermitteln, ohne daß Dritte die Informationen einsehen können. Interessante Einsatzmöglichkeiten sind Geldautomaten, das Bankgewerbe, die Übermittlung von vertraulichen Informationen aus dem Geschäfts- und Medienbereich.

Die Erfindung wird nachfolgend in Ausführungsbeispielen dargestellt. In den Zeichnungen zeigen
- Fig. 1: ein erfindungsgemäß ausgeführtes optisches System für einen Betrachter,
- Fig. 2: einen Ausschnitt aus einer erfindungsgemäßen Anordnung von Phasenmaske, Transmissions-Display, Prismenmaske und Fokussieroptik für einen Betrachter,
- Fig. 3: eine erfindungsgemäße Anordnung wie in Fig. 2, wobei jedoch die Phasen- und die Prismenmaske zu einer kombinierten Maske zusammengefaßt sind,
- Fig. 4: eine erfindungsgemäße Anordnung wie in Fig. 2, wobei jedoch die Phasen- und die Prismenmaske sowie die Fokussieroptik zu einer kombinierten Maske zusammengefaßt sind,
- Fig. 5: eine erfindungsgemäße Anordnung, wobei die Funktion der Fokussieroptik durch die Kollimationsoptik übernommen wird,
- Fig. 6: eine erfindungsgemäße Anordnung für einen bewegten Betrachter,
- Fig. 7: eine erfindungsgemäße Anordnung für zwei Betrachter,
- Fig. 8: eine erfindungsgemäße Anordnung für die Betrachtung von zweidimensionalen Szenen mit einem vergrößerten Beobachtungswinkel.

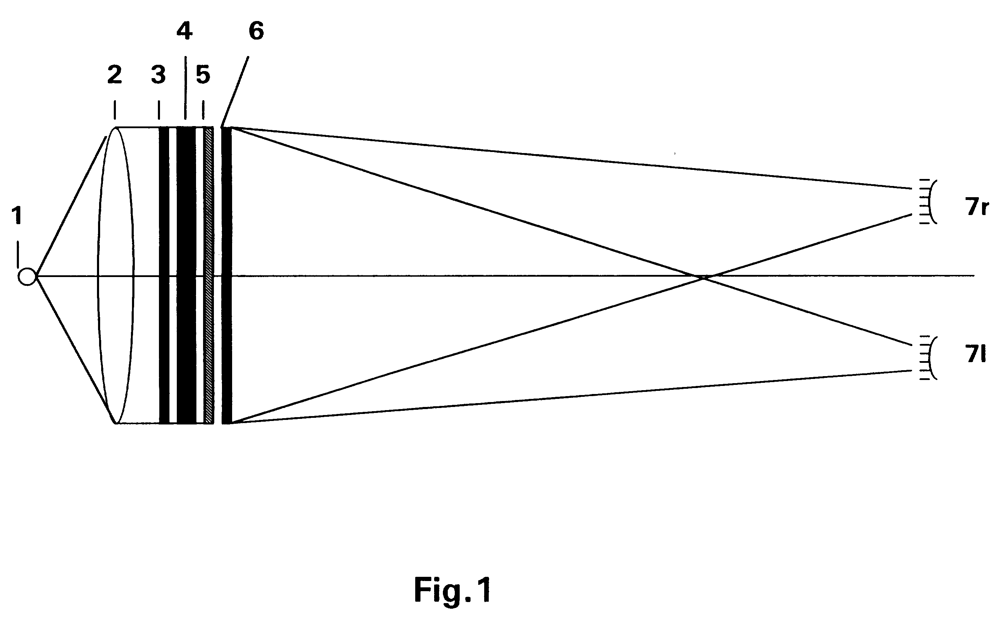

In Fig. 1 besteht das optische System aus einer Lichtquelle 1, einer Kollimationsoptik 2, einer Phasenmaske 3, einem Transmissions-Display 4, einer Prismenmaske 5 und einer Fokussieroptik 6. Das Licht der Lichtquelle 1 tritt nach der Kollimationsoptik parallel durch die Phasenmaske 3 und das Transmissions-Display 4. Danach wird es durch die Prismenmaske 5 in zwei Richtungen aufgeteilt und durch die Fokussieroptik auf die Augen 7r und 71 des Betrachters fokussiert.

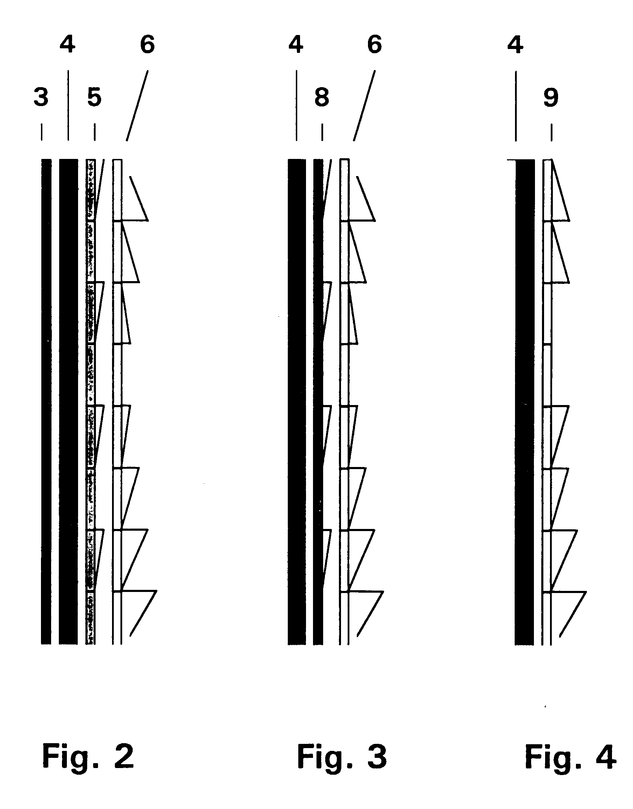

Fig. 2 zeigt einen Ausschnitt, bestehend aus Phasenmaske 3, Transmissions-Display 4, Prismenmaske 5 und Fokussieroptik 6 für einen Betrachter. Die Prismenmaske 5 wird aus linken und rechten Prismen gebildet, die das Licht auf das linke bzw. auf das rechte Auge des Betrachters lenken. Die Prismenwinkel der rechten bzw. der linken Prismen sind untereinander über die gesamte Matrixfläche gleich, aber voneinander verschieden. Im Fall der Fig. 2 ist ein Prismenwinkel, z. B. der der linken Prismen, Null. Das Licht passiert diese linken "Prismen" ohne Ablenkung und wird durch die nachfolgende Fokussieroptik auf das linke Auge des Betrachters fokussiert. Dagegen lenken die tatsächlich (rechten) Prismen der Prismenmaske 5 das parallel eintretende Licht ab. Zusammen mit der Fokussieroptik 6 wird dieses Licht auf das andere (das rechte) Auge des Betrachters fokussiert.

Den rechten und den linken Prismen sind im Transmissions-Display 4 rechte und linke Pixel zugeordnet, die jeweils das Halbbild für das rechte bzw. linke Auge enthalten.

Sind die Halbbilder stereoskopische Halbbilder, so sieht der Betrachter eine dreidimensionale Darstellung. Sind die Halbbilder einer zweidimensionalen Szene entnommen, so sieht der Betrachter eine zweidimensionale Darstellung.

Durch die Modulation des Lichts mit zufallsverteilten optischen Phasenhüben wird verhindert, daß der Betrachter auf die Lichtquelle adaptiert.

Die Phasen- und die Prismenmaske sowie die Fokussieroptik können als holografische optische Elemente und/oder mittels Prägetechnik hergestellt sein.

Fig. 3 zeigt erfindungsgemäß eine Kombination von Elementen, wie sie in Fig. 2 dargestellt sind. Hierbei sind aus Fig. 2 die Phasenmaske 3 und die Prismenmaske 5 vorteilhaft zur kombinierten Maske 8 in Fig. 3 zusammengefaßt.

Fig. 4 zeigt erfindungsgemäß eine weitergehende Zusammenfassung der in Fig. 2 dargestellten Elemente Phasenmaske 3, Prismenmaske 5 und Fokussieroptik 6 zur kombinierten Maske 9.

Die Masken 3, 5, 8, 9 oder andere durch Kombination entstandene Masken, das Transmissions-Display 4 und die Fokussieroptik können erfindungsgemäß auch in beliebiger anderer Reihenfolge und Zahl miteinander kombiniert werden. So kann, statt wie in Fig. 3 dargestellt, das Transmissions-Display zwischen der kombinierten Maske 8 und der Fokussieroptik 6 angeordnet sein.

Die Masken 3, 5, 8, 9 oder andere durch Kombination entstandene Masken können erfindungsgemäß auch direkt auf der Oberfläche des Transmissions-Displays aufgebracht sein.

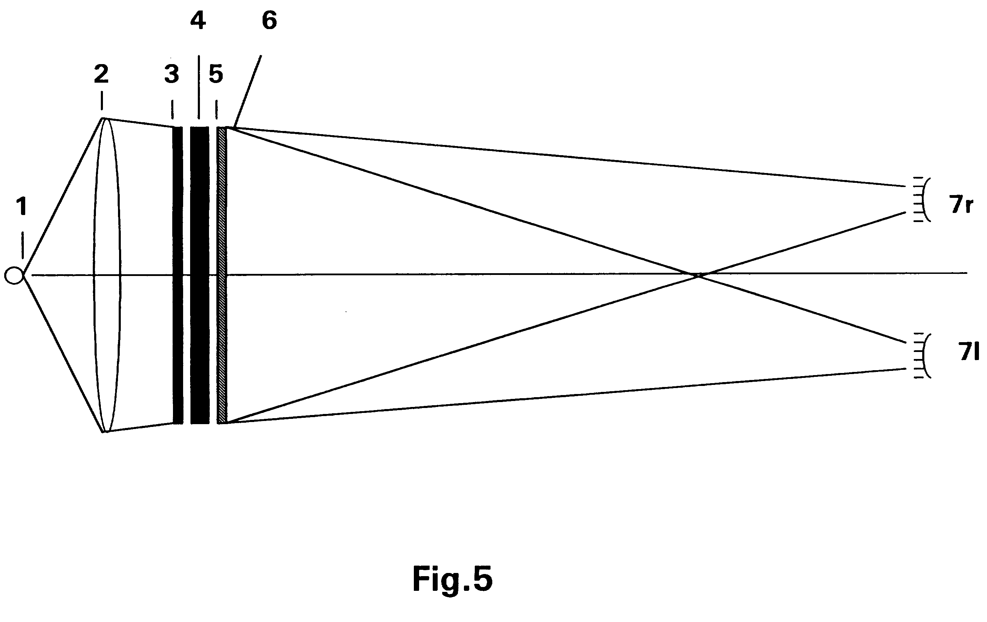

Eine weitere vorteilhafte Ausführung besteht erfindungsgemäß darin, daß die Funktion der Fokussieroptik in der Maske 6 oder in beliebig anderen kombinierten Masken, die diese Funktion enthalten, entfällt und durch die Kollimatonsoptik übernommen wird. Fig. 5 stellt eine erfindungsgemäße Anordnung dieser Art dar.

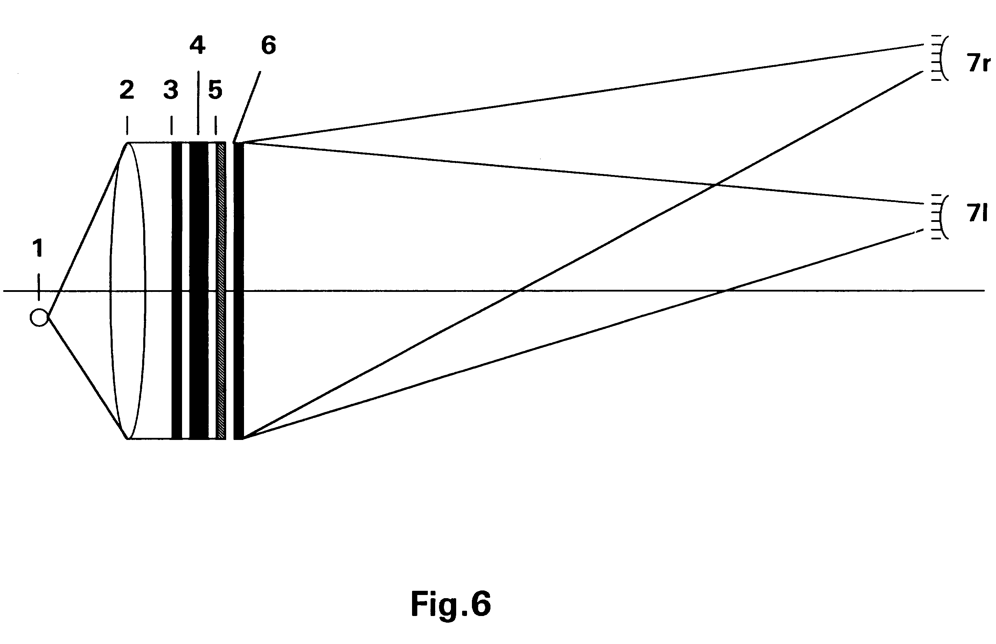

Ändert der Betrachter seinen Beobachtungsort, kann die Betrachtungsrichtung erfindungsgemäß nachgeführt werden. Nach Fig. 6 läßt sich das dadurch erreichen, daß der Ort der Lichtquelle durch ihre Verschiebung oder durch Einschalten anders positionierter Lichtquellen 1 verändert wird.

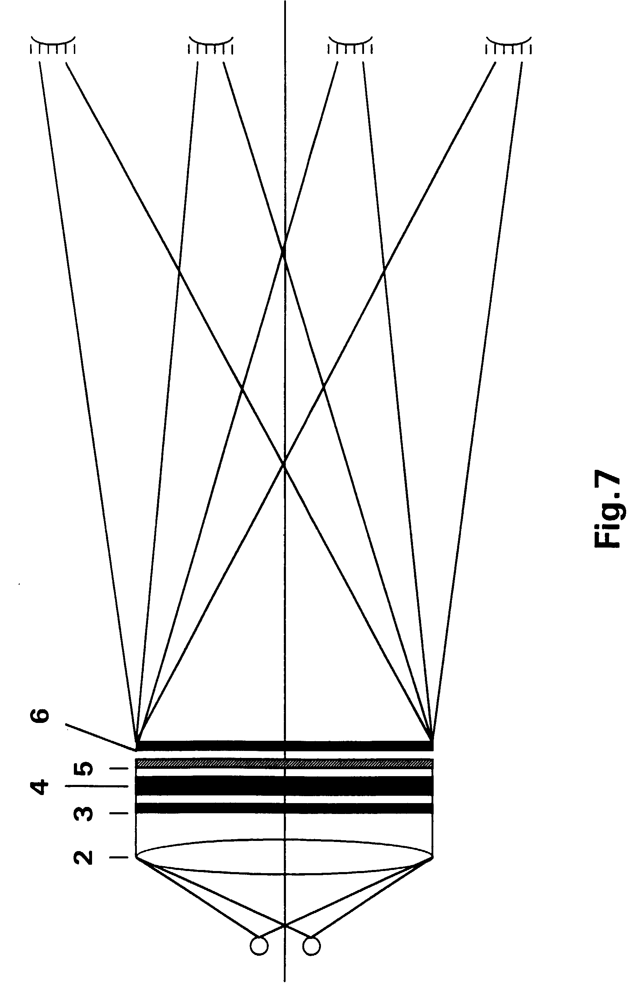

Fig. 7 zeigt eine optische Anordnung mit je einer punkt- oder linienförmigen Lichtquelle je Betrachter.

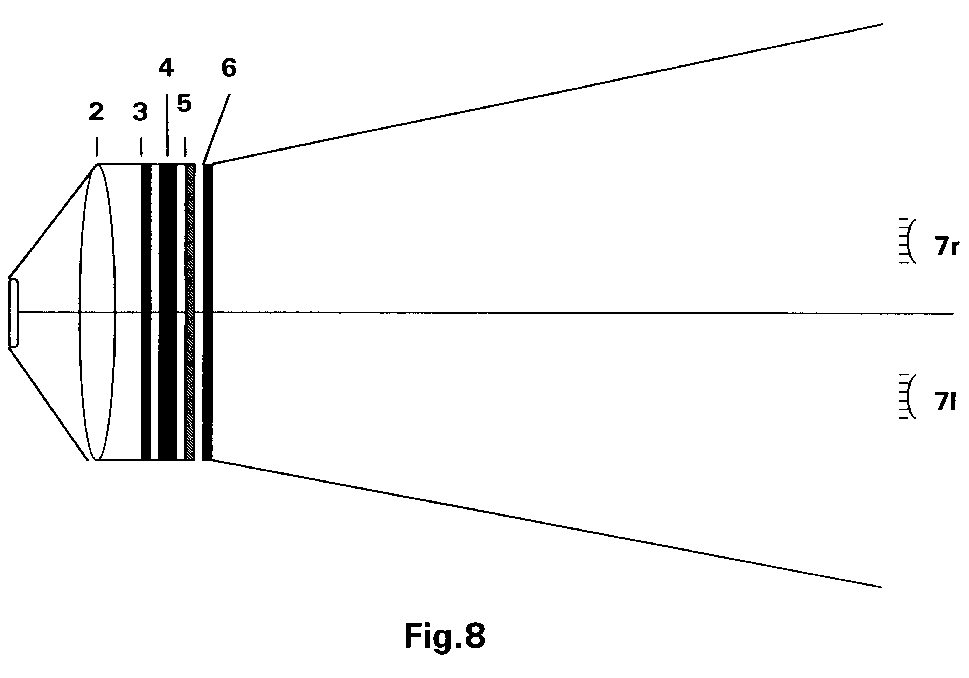

Das optische System ermöglicht erfindungsgemäß eine übliche zweidimensionale Darstellung mit vergrößertem Beobachtungswinkel, wie in Fig. 8 dargestellt. Dabei wird eine größere Lichtquelle 1 verwendet oder dadurch erzeugt, daß weitere benachbarte Lichtquellen zugeschaltet werden.

## Patentansprüche

1. Optisches System zur zwei- oder dreidimensionalen Darstellung von Information, mit einem Transmissions-Display (4) mit matrixförmig angeordneten, elektronisch ansteuerbaren Pixeln, einer Lichtquellenanordnung mit mindestens einer punkt- oder linienförmigen Lichtquelle (1), die, von einem Betrachter aus gesehen, hinter dem Transmissions-Display (4) liegt, einer Kollimationsoptik (2), die der Lichtquellenanordnung nachgeordnet ist, sowie einer Fokussieroptik (6), **gekennzeichnet dadurch, daß** das linke und rechte stereoskopische Halbbild gleichzeitig dargestellt, wird, eine Prismenmaske (5) vorgesehen ist, die Prismen mit zwei voneinander verschiedenen Prismenwinkeln in einer matrixförmigen Anordnung enthält, die Prismen in ihrer räumlichen Anordnung auf der Prismenmaske mit den Pixeln des Transmissions-Displays deckungsgleich sind, die Pixel für das linke stereoskopische Halbbild den Prismen mit dem einen Prismenwinkel und die Pixel für das rechte stereoskopische Halbbild den Prismen mit dem anderen Prismenwinkel zugeordnet sind, die Fokussieroptik (6) als Feldlinse für das gesamte Display ausgebildet ist mit einer Brennweite, die dem Betrachtungsabstand entspricht, und das Licht für einen Betrachter von der Lichtquellenanordnung (1) und der Kollimationsoptik (2) aus etwa parallel in die Prismen (5) eintritt sowie von den einen Prismen und der Fokussieroptik (6) auf das eine Auge des Betrachters und von den anderen Prismen und der Fokussieroptik (6) auf das andere Auge des Betrachters gerichtet ist.

2. Optisches System nach Anspruch 1, **gekennzeichnet dadurch, daß** eine Phasenmaske (3) vorgesehen ist, wobei jedem Pixel ein Phasenelement der Phasenmaske (3) mit zufallsverteilten optischen Phasenhüben zugeordnet ist.

3. Optisches System nach Anspruch 1, **gekennzeichnet dadurch, daß** die Prismen der Prismenmaske (5) spaltenförmig oder zeilenförmig mit gleichem Prismenwinkel je Spalte oder je Zeile angeordnet sind.

4. Optisches System nach Anspruch 1, **gekennzeichnet dadurch, daß** die Fokussieroptik als Maske (6) mit Feldlinsenfunktion ausgebildet ist.

5. Optisches System nach den Ansprüchen 2 bis 4, **gekennzeichnet dadurch, daß** wenigsten zwei der Masken als eine kombinierte Maske (8 oder 9) ausgebildet sind.

6. Optisches System nach den Ansprüchen 2 bis 5, **gekennzeichnet dadurch, daß** die Phasenelemente bzw. Prismen wenigstens einer Maske als holografische optische Elemente ausgeführt sind.

7. Optisches System nach den Ansprüchen 2 bis 5, **gekennzeichnet dadurch, daß** die Phasenelemente bzw. Prismen wenigstens einer Maske in Prägetechnik ausgeführt sind.

8. Optisches System nach Anspruch 1, **gekennzeichnet dadurch, daß** bei einer Ausführung für jeden weiteren Betrachter eine weitere Lichtquellenanordnung (1), seitlich gegen die andere(n) versetzt, vorgesehen ist.

9. Optisches System nach den Ansprüchen 1 und 8, **gekennzeichnet dadurch, daß** bei einer Ausführung für wenigstens zwei Betrachter der Bildinhalt des Transmissions-Displays (4) synchron mit den für die Betrachter entsprechenden Lichtquellenanordnungen sequentiell umschaltbar ist.

10. Optisches System nach Anspruch 1, **gekennzeichnet dadurch, daß** der Ort der Lichtquellenanordnung (1) etwa parallel zum Transmissions-Display (4) verschiebbar ist.

## Claims

1. An optical system for the two- and three-dimensional representation of information, with a transmission display (4) with electronically selectable pixels in a matrix arrangement, a light-source arrangement with at least one point or line source of light (1), which, as seen from a viewer, lies behind the transmission display (4), a collimating optics (2), which is arranged after the light-source arrangement, as well as a focussing optics (6), **in which** the left and right stereoscopic semi-images are represented simultaneously, a prism mask (5) is provided, containing prisms with two different prism angles in a matrix arrangement, the prisms in their spatial arrangement on the prism mask are congruent with the pixels of the transmission display, the pixels for the left stereoscopic semi-image are assigned to the prisms with one of the prism angles and the prisms for the right stereoscopic semi-image are assigned to the prisms with the other prism angle, the focussing optics (6) being designed as a field lens for the overall display with a focal length corresponding to the viewing distance, and the light for a viewer entering the prisms (5) from the light-source arrangement (1) and the collimating optics (2) about parallel as well as being directed from one type of the prisms and the focussing optics (6) to one eye of the viewer and from the other prisms and the focussing optics (6) to the other eye of the viewer.

2. An optical system as claimed in Claim 1 **in which** a phase mask (3) is provided, each pixel being assigned a phase element of the phase mask (3) with randomly distributed optical phase deviations.

3. An optical system as claimed in Claim 1 **in which** the prisms of the prism mask (5) are arranged in columns or lines with the same prism angle per column or per line.

4. An optical system as claimed in Claim 1 **in which** the focussing optics is designed as a mask (6) with a field lens function.

5. An optical system as claimed in Claims 2 to 4 **in which** at least two of the masks are designed as a combined mask (8 or 9).

6. An optical system as claimed in Claims 2 to 5 **in which** the phase elements or prisms of at least one mask are designed as holographic optical elements.

7. An optical system as claimed in Claims 2 to 5 **in which** the phase elements or prisms of at least one mask are produced by embossing.

8. An optical system as claimed in Claim 1 **in which** in an embodiment for each additional viewer another light-source arrangement (I) is provided, laterally displaced with respect to the other(s).

9. An optical system as claimed in Claims 1 and 8 **in which** in one embodiment for at least two viewers the image content of the transmission display (4) can be sequentially switched synchronously with the corresponding light-source arrangements for the viewers.

10. An optical system as claimed in Claim 1 **in which** the position of the light-source arrangement (1) can be shifted about parallel to the transmission display (4).

## Revendications

1. Système d'optique destiné à la visualisation d'information à deux ou trois dimensions à l'aide d'un visuel de transmission (4) aux pixels à excitation électronique disposés en forme de matrice, d'un ensemble de sources lumineuses comprenant au moins une source lumineuse ponctuelle ou linéaire (1) qui se trouve, vue de la perspective d'un individu, derrière le visuel de transmission (4), d'une optique de collimation (2) placée en aval de l'ensemble des sources lumineuses, ainsi que d'une optique de focalisation (6), **caractérisé par** une visualisation simultanée des images stéréoscopiques droite et gauche, par un masque à prismes (5) avec des prismes à deux angles différents l'un de l'autre à disposition en forme de matrice, par le fait que la disposition des prismes sur le masque à prismes est adaptée à celle des pixels du visuel de transmission, par la coordination des pixels pour l'image stéréoscopique gauche aux prismes avec l'un des angles prismatiques et la coordination des pixels pour l'image stéréoscopique droite aux prismes avec l'autre angle prismatique, par une optique de focalisation (6) qui sert de lentille de champ pour tout le visuel et dont la focale est adaptée à la distance de l'individu, par le fait que pour l'individu la lumière entre dans les prismes (5) à peu près parallèlement à partir de l'ensemble de sources lumineuses (1) et de l'optique de collimation (2) et se dirige vers l'un des yeux de l'individu à partir d'une partie des prismes et de l'optique de focalisation (6) et vers l'autre oeil à partir de l'autre partie des prismes et de l'optique de focalisation (6).

2. Système d'optique d'après revendication 1, **caractérisé par** l'intégration d'un masque de phase (3), où chaque pixel est coordonné à un élément de phase du masque de phase (3) avec des amplitudes de déphasage optique aléatoires.

3. Système d'optique d'après revendication 1, **caractérisé par** le fait que les prismes du masque à prismes (5) sont disposés en colonnes ou en lignes avec le même angle de prisme pour chaque colonne ou ligne.

4. Système d'optique d'après revendication 1, **caractérisé par** une optique de focalisation qui est réalisée en forme d'un masque (6) chargé de la fonction de lentille de champ.

5. Système d'optique d'après les revendications 2 ou 4, **caractérisé par** le fait qu'au moins deux masques forment un masque combiné (8 ou 9).

6. Système d'optique d'après les revendications 2 à 5, **caractérisé par** la réalisation des éléments de phase ou des prismes d'au moins un des masques en forme d'éléments optiques holographiques.

7. Système d'optique d'après les revendications 2 à 5, **caractérisé par** la réalisation des éléments de phase ou des prismes d'au moins un des masques par estampage.

8. Système d'optique d'après revendication 1, **caractérisé par** le fait que pour chaque autre individu s'ajoute un autre ensemble de sources lumineuses (1) qui est déplacé latéralement contre l'autre ou les autres.

9. Système d'optique d'après les revendications 1 et 8, **caractérisé par** le fait que les modèles destinés à deux individus au minimum permettent une commande séquentielle des signaux d'image du visuel de transmission (4) parallèlement aux ensembles des sources lumineuses individuelles.

10. Système d'optique d'après revendication 1, **caractérisé par** le fait que le lieu des ensembles des sources lumineuses (1) est déplaçable à peu près parallèlement au visuel de transmission (4).
